# EUROPÄISCHE PATENTSCHRIFT

(11) **EP 3 414 043 B1**
(45) Veröffentlichungstag und Bekanntmachung des Hinweises auf die Patenterteilung: **04.09.2019**
(21) Anmeldenummer: 18707289.7
(22) Anmeldetag: 14.02.2018
(51) Int. Cl.: B23K 26/06, B23K 1/005

(54) **VERFAHREN UND LASERANORDNUNG ZUM AUFSCHMELZEN EINES LOTMATERIALDEPOTS MITTELS LASERENERGIE**
METHOD AND LASER ASSEMBLY FOR MELTING A SOLDER MATERIAL DEPOSIT BY MEANS OF LASER ENERGY
PROCÉDÉ ET DISPOSITIF LASER DESTINÉS À LA FUSION D'UN DÉPÔT DE MATIÈRE DE SOUDURE AU MOYEN D'UNE ÉNERGIE LASER

(30) Priorität: 28.02.2017 DE 102017104097
(43) Veröffentlichungstag der Anmeldung: 19.12.2018
(73) Patentinhaber: Pac Tech - Packaging Technologies GmbH, 14641 Nauen (DE)
(72) Erfinder: AZDASHT, Ghassem, 13591 Berlin (DE)
(74) Vertreter: advotec.
(86) Internationale Anmeldenummer: PCT/EP2018/053616
(87) Internationale Veröffentlichungsnummer: WO 2018/158077

(56) Entgegenhaltungen:
- WO-A1-91/06389
- WO-A1-2009/156505
- DE-A1- 19 544 929
- GB-A- 2 261 620
- US-A1- 2009 200 279

## Beschreibung

Die vorliegende Erfindung betrifft ein Verfahren zum Aufschmelzen eines Lotmaterialdepots mittels Laserenergie, bei dem das Lotmaterialdepot in einer ersten Beaufschlagungsphase mittels einer ersten Lasereinrichtung mit von einer ersten Laserquelle emittierter Laserstrahlung beaufschlagt wird und in einer zweiten Beaufschlagungsphase mittels einer zweiten Lasereinrichtung mit von einer zweiten Laserquelle emittierter Laserstrahlung beaufschlagt wird, wobei die erste Laserquelle eine geringere Laserleistung aufweist als die zweite Laserquelle, wobei mittels einer Schalteinrichtung von der ersten Beaufschlagungsphase in die zweite Beaufschlagungsphase gewechselt und die Schaltung durch einen Temperatursensor ausgelöst wird, mit dem die Temperatur des Lotmaterialdepots zumindest während der ersten Beaufschlagungsphase gemessen wird. Darüber hinaus betrifft die Erfindung eine Laseranordnung zur Durchführung des Verfahrens.

Verfahren zum Aufschmelzen eines Lotmaterialdepots, bei denen Lasereinrichtungen eingesetzt werden, sind hinlänglich bekannt. Zum Aufschmelzen von Lasermaterialdepots, die insbesondere als Lotkugeln ausgebildet auf Verbindungsstellen zwischen zwei miteinander zu verbindenden Komponenten aufgebracht und zur Herstellung der Verbindung aufgeschmolzen werden, eignet sich Laserenergie in besonderem Maße, da die Laserstrahlung eine hohe Energiedichte aufweist und somit eine punktuelle Beaufschlagung des Lotmaterialdepots ausreicht, um innerhalb kürzester Zeit ein Aufschmelzen zu erreichen. Dabei erfolgt die Erwärmung des Lotmaterials in Folge der Absorption der in Form von Strahlung von einer Laserquelle emittierten Laserenergie. Je besser das Absorptionsvermögen des Lotmaterialdepots bzw. des als Lotmaterialdepot verwendeten Lotmaterials ist, umso geringer ist der Anteil der Laserstrahlung, der als Reflexionsstrahlung vom Lotmaterial reflektiert wird, ohne zu dessen Erwärmung beizutragen. In der Praxis werden bislang erhebliche, durch die Strahlungsreflexion bedingte Energieverluste in Kauf genommen, um die zum Aufschmelzen benötigte ausreichende Energiemenge durch Absorption in das Lotmaterialdepot einzubringen.

Die GB 2261620 zeigt ein Verfahren zum Aufschmelzen eines Lotmaterialdepots mittels Laserenergie, bei dem das Lotmaterialdepot in einer ersten und in einer zweiten Beaufschlagungsphase mittels einer Lasereinrichtung mit von einer Laserquelle emittierter Laserstrahlung beaufschlagt wird, wobei in der ersten Phase die Laserquelle eine geringere Laserleistung aufweist als in der zweiten Phase.

Der Oberbegriff von Anspruch 6 basiert auf der WO 91/06389.

Der vorliegenden Erfindung liegt die Aufgabe zugrunde, ein Verfahren sowie eine Laseranordnung vorzuschlagen, derart, dass das Aufschmelzen eines Lotmaterialdepots mit verringerter Laserleistung ermöglicht wird.

Zur Lösung dieser Aufgabe weist das erfindungsgemäße Verfahren die Merkmale des Anspruchs 1 auf.

Erfindungsgemäß werden zum Aufschmelzen des Lotmaterialdepots zwei Lasereinrichtungen eingesetzt, die eine Aufteilung des Verfahrens zum Aufschmelzen des Lotmaterialdepots in eine erste und eine zweite Beaufschlagungsphase ermöglichen, wobei das Lotmaterialdepot in der ersten Beaufschlagungsphase mit von einer ersten Laserquelle emittierter Laserenergie beaufschlagt wird, und in der zweiten Beaufschlagungsphase mit von einer zweiten Laserquelle emittierter Laserenergie beaufschlagt wird. Dabei weist die erste Laserquelle eine geringere Laserleistung als die zweite Laserquelle auf, so dass mittels der ersten Laserquelle ein Energieeintrag in das Lotmaterialdepot erfolgt, der noch kein Aufschmelzen des Lotmaterialdepots ermöglicht, jedoch durch die Erwärmung des Lotmaterialdepots auf ein erhöhtes Temperaturniveau das Absorptionsvermögen des Lotmaterialdepots erhöht. Hierdurch wird der vorteilhafte Effekt erzielt, dass nach einer Schaltung in die zweite Beaufschlagungsphase mittels der zweiten Laserquelle, die eine höhere Laserleistung aufweist als die erste Laserquelle, nur noch zusätzlich der Energieeintrag in das Lotmaterialdepot eingebracht werden muss, um ausgehend von dem in der ersten Beaufschlagungsphase erreichten Temperaturniveau das Lotmaterialdepot auf Schmelztemperatur zu erwärmen, wobei aufgrund des nach der ersten Beaufschlagungsphase erhöhten Absorptionsvermögens des Lotmaterialdepots der Reflexionsanteil der Laserstrahlung reduziert und dadurch die Strahlungseffektivität erhöht wird.

Ein besonders positiver Effekt, der sich aus der erfindungsgemäßen Aufteilung des Verfahrens zum Aufschmelzen eines Lotmaterialdepots in eine erste Beaufschlagungsphase und eine zweite Beaufschlagungsphase ergibt, ist, dass die Laserleistung der während der zweiten Beaufschlagungsphase zum Einsatz kommenden Lasereinrichtung erheblich reduziert werden kann. Da grundsätzlich die Leistung einer Laserquelle in einem unteren Leistungsbereich exakter geregelt werden kann als in einem oberen Leistungsbereich, ist hierdurch zum einen eine exaktere Regelung der Laserleistung möglich. Zum anderen können thermische Schäden, die insbesondere im oberen Leistungsbereich auftreten, verhindert werden. Insbesondere kann auch die benötigte Laserleistung der Laserquelle der zweiten Lasereinrichtung von vornherein geringer ausgelegt werden, was einerseits eine Reduzierung der Anlagenkosten ermöglicht, andererseits auch eine Miniaturisierung der bei dem Verfahren eingesetzten Laseranordnung ermöglicht.

Besonders vorteilhaft ist es, wenn in der zweiten Beaufschlagungsphase die Beaufschlagung des Lotmaterialdepots mit der zweiten Lasereinrichtung zusätzlich zur Beaufschlagung mit der ersten Lasereinrichtung erfolgt, so dass die zweite Lasereinrichtung mit noch geringerer Leistung betrieben werden kann.

Wenn der bei dem erfindungsgemäßen Verfahren eingesetzte Temperatursensor, der die Schaltung von der ersten Beaufschlagungsphase in die zweite Beaufschlagungsphase durch die Schalteinrichtung auslöst, auch zur Messung der Temperatur des Lotmaterialdepots während der zweiten Beaufschlagungsphase verwendet wird, und die Beendigung der zweiten Beaufschlagungsphase in Abhängigkeit von der Temperatur des Lotmaterialdepots erfolgt, kann das Verfahren mit einem minimalen apparativen Aufwand durchgeführt werden.

Vorzugsweise wird die Schalttemperatur in Abhängigkeit von der Beschaffenheit des Lotmaterialdepots gewählt, so dass für die Festlegung der Schalttemperatur jeweils das materialspezifische, sich mit der Materialtemperatur ändernde Absorptionsvermögen bei der Definition der Umschalttemperatur berücksichtigt wird.

Besonders vorteilhaft ist es, wenn die erste Lasereinrichtung in einem Standby-Modus getaktet für eine definierte Einschaltdauer eingeschaltet und mittels der Schalteinrichtung in Abhängigkeit von einer mittels des Temperatursensors gemessenen Präsenztemperatur des Lotmaterialdepots in einen Betriebsmodus umgeschaltet wird. Hierdurch ist es möglich, den Temperatursensor nicht nur zur Auslösung des Wechsels zwischen der ersten Beaufschlagungsphase und der zweiten Beaufschlagungsphase sowie gegebenenfalls auch zur Beendigung der zweiten Beaufschlagungsphase einzusetzen, sondern den Temperatursensor auch zur Detektion des Lotmaterialdepots zu verwenden, da die Messung einer Temperatur des Lotmaterialdepots die Präsenz eines Lotmaterialdepots voraussetzt. Somit ermöglicht der Temperatursensor die Auslösung des Verfahrens dann, wenn während einer sich im Takt wiederholenden Einschaltdauer der ersten Lasereinrichtung, während der die erste Lasereinrichtung sich in einem Betriebsmodus befindet, eine Temperatur des Lotmaterialdepots mittels des Temperatursensors messbar ist. Eine Temperatur des Lotmaterialdepots ist natürlich nur dann messbar, wenn ein Lotmaterialdepot präsent ist, so dass ein von dem Temperatursensor ermittelter Temperaturwert die Präsenz eines Lotmaterialdepots anzeigt.

Die erfindungsgemäße Laseranordnung weist die Merkmale des Anspruchs 6 auf.

Erfindungsgemäß weist die Laseranordnung eine erste Lasereinrichtung mit einer ersten Laserquelle und eine zweite Lasereinrichtung mit einer zweiten Laserquelle auf, wobei die erste Laserquelle eine geringere Laserleistung emittiert als die zweite Laserquelle. Darüber hinaus weist die erfindungsgemäße Laseranordnung eine Schalteinrichtung zur Aktivierung der zweiten Laserquelle auf, wobei die Schalteinrichtung mit einem Temperatursensor zur Auslösung der Schalteinrichtung verbunden ist.

Vorzugsweise weist die erste Lasereinrichtung als Laserquelle einen Diodenlaser und die zweite Lasereinrichtung als Laserquelle einen Pulslaser auf, so dass schon bei der Auswahl der Lasereinrichtungen dem besonderen, aus der Durchführung des erfindungsgemäßen Verfahrens resultierenden Vorteil Rechnung getragen wird, dass für die erste Lasereinrichtung eine Laserquelle mit relativ geringer Leistung eingesetzt wird, die lediglich ausreichen muss, um das Lasermaterialdepot auf ein Temperaturniveau mit erhöhtem Absorptionsvermögen zu bringen, und die zweite Lasereinrichtung im Vergleich zur ersten Lasereinrichtung als "Leistungslaser" ausgebildet ist.

Wenn der Temperatursensor als ein in einem Strahlengang eines Reflexionsstrahls des Lotmaterialdepots angeordneter Infrarot-Sensor ausgebildet ist, kann zum einen die Temperatur des Lotmaterialdepots berührungslos gemessen werden, und zum anderen kann der ohnehin sich aus der Laserenergiebeaufschlagung ergebende Reflexionsstrahl zur Temperaturmessung genutzt werden.

Wenn für den Strahlengang des Reflexionsstrahls ein Strahlenkanal ausgebildet ist, in dem zumindest abschnittsweise gleichzeitig ein Laserstrahlengang der ersten Laserquelle und ein Laserstrahlengang der zweiten Laserquelle verläuft, kann mit der Ausbildung lediglich eines Strahlenkanals eine Abschirmung sämtlicher Strahlengänge gegenüber der Umgebung erfolgen.

Vorzugsweise weist der Strahlenkanal eine Lotmaterialmaterialdepotaufnahme zur Aufnahme des Lotmaterialdepots während der ersten und zweiten Beaufschlagungsphase auf, so dass der Strahlengang nicht nur zur Abschirmung der Laserstrahlengänge bzw. des Reflexionsstrahlengangs dient, sondern auch zur definierten Anordnung des Lotmaterialdepots an einer Verbindungsstelle.

Nachfolgend werden eine bevorzugte Ausführungsform des erfindungsgemäßen Verfahrens sowie eine zur Ausführung des Verfahrens geeignete Laseranordnung anhand der Zeichnung näher erläutert.

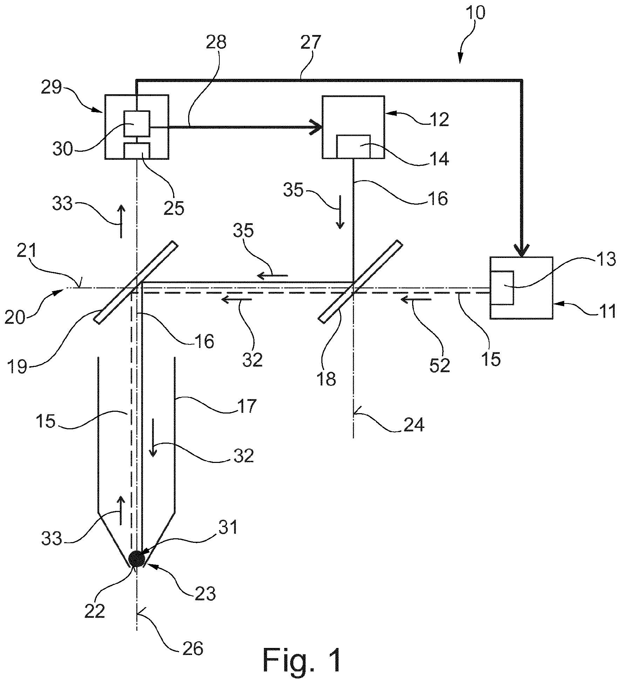

Figur 1 zeigt eine Laseranordnung 10 mit einer ersten Lasereinrichtung 11 und einer zweiten Lasereinrichtung 12, wobei die Lasereinrichtung 11 eine als Diodenlaser 13 ausgebildete Laserquelle und die Lasereinrichtung 12 eine als Pulslaser 14 ausgebildete Laserquelle aufweist. Zur Umlenkung eines Laserstrahlengangs 15 des Diodenlasers 13 sowie eines Laserstrahlengangs 16 des Pulslasers 14 in einen im vorliegenden Fall als Applikationskanüle 17 ausgebildeten Strahlenkanal ist eine zwei halbdurchlässige optische Spiegel 18, 19 umfassende Strahlleiteinrichtung 20 vorgesehen, wobei die Spiegel 18, 19 in einer Reihenanordnung auf einer optischen Achse 21 des Diodenlasers 13 angeordnet sind, derart, dass der Laserstrahlengang 15 des Diodenlasers 13 den ersten Spiegel 18 auf der optischen Achse 21 durchdringt und der zweite Spiegel 19 den Laserstrahlengang 15 des Diodenlasers 13 in die Applikationskanüle 17 ablenkt, so dass der Laserstrahlengang 15 im Verlauf der Applikationskanüle 17 auf eine am unteren Ende der Applikationskanüle 17 ausgebildete und mit einer Applikationsöffnung 22 versehene Lotmaterialdepotaufnahme 23 ausgerichtet ist.

Der Laserstrahlengang 16 des Pulslasers 14 wird durch den ersten Spiegel 18 der Strahlleiteinrichtung 20 von einer optischen Achse 24 des Pulslasers 14 in Richtung der optischen Achse 21 des Diodenlasers 13 abgelenkt und schließlich nachfolgend vom zweiten Spiegel 19 der Strahlleiteinrichtung 20 ebenfalls auf die am unteren Ende der Applikationskanüle 17 ausgebildete Lotmaterialdepotaufnahme 23 ausgerichtet.

Weiterhin weist die Laseranordnung 10 einen im dargestellten Ausführungsbeispiel als Infrarot-Sensor 25 ausgebildeten Temperatursensor 25 einer Sensoreinrichtung 29 auf, der auf einer innerhalb der Applikationskanüle 17 ausgebildeten optischen Achse 26 angeordnet ist und über eine erste Signalleitung 27 mit der Lasereinrichtung 11 und über eine zweite Signalleitung 28 mit der Lasereinrichtung 12 verbunden ist.

Die Sensoreinrichtung 29 weist neben dem Temperatursensor 25 eine Schalteinrichtung 30 auf, die eine getrennte oder gleichzeitige Aktivierung der Signalleitungen 27 und 28 ermöglicht. Der Begriff Signalleitung ist im vorliegenden Fall rein funktional zu verstehen, so dass über die Signalleitung auch berührungslos Signale übertragen werden können.

Zur Durchführung eines Verfahrens zum Aufschmelzen eines hier als Lotkugel 31 ausgebildeten Lotmaterialdepots erfolgt ausgehend von einer Anordnung des Lotmaterialdepots in der Lotmaterialdepotaufnahme 23 der Applikationskanüle 17 eine Aktivierung der Laseranordnung 10. Je nach Ausgestaltung des Applikationsverfahrens zur Applikation der Lotkugel 31 an einer hier nicht näher dargestellten Verbindungsstelle zwischen zwei miteinander zu verbindenden Komponenten kann die Applikationsöffnung 22 größer oder kleiner im Durchmesser als die Lotkugel 31 bemessen sein. Im Falle einer Applikation der Lotkugel 31 vor dem Aufschmelzen der Lotkugel 31 ist die Applikationsöffnung der Lotkugelaufnahme 23 größer bemessen als der Durchmesser der Lotkugel; im Fall der Applikation der Lotkugel 31 nachfolgend dem zumindest partiellen Aufschmelzen der Lotkugel 31 ist die Applikationsöffnung 22 im Durchmesser zumindest geringfügig kleiner bemessen als der Durchmesser der Lotkugel 31.

Im Fall des dargestellten Ausführungsbeispiels wird die erste mit dem Diodenlaser 13 als Laserquelle versehene Lasereinrichtung 11 in einem Standby-Modus getaktet betrieben, derart, dass der Diodenlaser 13 in gleichbleibenden zeitlichen Abständen für eine definierte Einschaltdauer eingeschaltet und ein Laserstrahl 32 emittiert wird.

In dem Fall, dass sich eine Lotkugel 31 in der Lotmaterialdepotaufnahme 23 der Applikationskanüle 17 befindet, erfolgt eine zumindest teilweise Reflexion des Laserstrahls 32 längs der Strahlengangachse 26 mit einem Reflexionsstrahl 33, dessen Infrarot-Anteil durch den als Infrarot-Sensor 25 ausgebildeten Temperatursensor der Sensoreinrichtung 29 detektiert wird. In diesem Fall erfolgt über die Signalleitung 27 eine Umschaltung der Lasereinrichtung 11 vom Standby-Modus in den Betriebsmodus, so dass die Lasereinrichtung 11 über die Einschaltdauer hinaus so lange im Betriebsmodus verbleibt, bis von dem IR-Sensor 25 der Sensoreinrichtung 29 eine einer definierten Schalttemperatur entsprechende Temperatur der Lotkugel 31 gemessen und durch die Schalteinrichtung 30 über die Signalleitung 28 die Lasereinrichtung 12 in den Betriebsmodus geschaltet wird. Damit erfolgt eine Aktivierung des Pulslasers 14 mit Emission eines Laserstrahls 32 längs des Strahlengangs 16, so dass nachfolgend die in der Lotmaterialdepotaufnahme 23 angeordnete Lotkugel 31 im vorliegenden Fall zusätzlich zur Laserleistung des Diodenlasers 13 mit der höheren Laserleistung des Pulslasers 14 beaufschlagt wird.

Wenn über den Reflexionsstrahl 33 mittels des IR-Sensors 25 eine definierte Schmelztemperatur der Lotkugel 31 erreicht ist, erfolgt über die Schalteinrichtung 30 eine Abschaltung des Pulslasers 14. Anschließend erfolgt eine Entfernung der Lotkugel 31 aus der Lotmaterialdepotaufnahme 23, wobei die Entfernung je nach dem Durchmesserverhältnis zwischen der Applikationsöffnung 22 und der Lotkugel 31 durch ein vorzugsweise mittels Luftdruck bewirktes Austreiben der aufgeschmolzenen Lotkugel 31 aus der Applikationsöffnung 22 oder durch Abheben der Applikationskanüle 17 von einem mit der aufgeschmolzenen Lotkugel 31 verbundenen Substrat erfolgen kann.

## Patentansprüche

1. Verfahren zum Aufschmelzen eines Lotmaterialdepots mittels Laserenergie, bei dem das Lotmaterialdepot in einer ersten Beaufschlagungsphase mittels einer ersten Lasereinrichtung (11) mit von einer ersten Laserquelle emittierter Laserstrahlung beaufschlagt wird und in einer zweiten Beaufschlagungsphase mittels einer zweiten Lasereinrichtung (12) mit von einer zweiten Laserquelle emittierter Laserstrahlung beaufschlagt wird, wobei die erste Laserquelle eine geringere Laserleistung aufweist als die zweite Laserquelle, wobei mittels einer Schalteinrichtung (30) von der ersten Beaufschlagungsphase in die zweite Beaufschlagungsphase gewechselt und die Schaltung durch einen Temperatursensor ausgelöst wird, mit dem die Temperatur des Lotmaterialdepots zumindest während der ersten Beaufschlagungsphase gemessen wird.

2. Verfahren nach Anspruch 1,
**dadurch gekennzeichnet,**
**dass** in der zweiten Beaufschlagungsphase die Beaufschlagung des Lotmaterialdepots mit der zweiten Lasereinrichtung (12) zusätzlich zur Beaufschlagung mit der ersten Lasereinrichtung (11) erfolgt.

3. Verfahren nach Anspruch 1 oder 2,
**dadurch gekennzeichnet,**
**dass** mittels des Temperatursensors die Temperatur des Lotmaterialdepots während der zweiten Beaufschlagungsphase gemessen wird, und die Beendigung der zweiten Beaufschlagungsphase in Abhängigkeit von der Temperatur des Lotmaterialdepots erfolgt.

4. Verfahren nach einem der vorangehenden Ansprüche,
**dadurch gekennzeichnet,**
**dass** die Schalttemperatur in Abhängigkeit von der Beschaffenheit des Lotmaterialdepots gewählt wird.

5. Verfahren nach einem der vorangehenden Ansprüche,
**dadurch gekennzeichnet,**
**dass** die erste Lasereinrichtung (11) in einem Standby-Modus getaktet für eine definierte Einschaltdauer eingeschaltet und mittels der Umschalteinrichtung (30) in Abhängigkeit von einer mittels des Temperatursensors gemessenen Präsenztemperatur des Lotmaterialdepots in einen Betriebsmodus umgeschaltet wird.

6. Laseranordnung (10) zur Beaufschlagung eines insbesondere als Lotkugel (31) ausgebildeten Lotmaterialdepots mit Laserenergie, wobei die Laseranordnung eine erste Lasereinrichtung (11) mit einer ersten Laserquelle und eine zweite Lasereinrichtung (12) mit einer zweiten Laserquelle aufweist, **dadurch gekennzeichnet, dass** die erste Laserquelle eine geringere Laserleistung emittiert als die zweite Laserquelle, und die Laseranordnung eine Schalteinrichtung (30) zur Aktivierung der zweiten Laserquelle aufweist, wobei die Schalteinrichtung mit einem Temperatursensor zur Auslösung der Schalteinrichtung (30) verbunden ist.

7. Laseranordnung nach Anspruch 6,
**dadurch gekennzeichnet,**
**dass** die erste Lasereinrichtung (11) einen Diodenlaser (13) und die zweite Lasereinrichtung (12) einen Pulslaser (14) aufweist.

8. Laseranordnung nach Anspruch 6 oder 7,
**dadurch gekennzeichnet,**
**dass** der Temperatursensor als ein in einem Strahlengang eines Reflexionsstrahls (33) des Lotmaterialdepots angeordneter Infrarot-Sensor (25) ausgebildet ist.

9. Laseranordnung nach Anspruch 8,
**dadurch gekennzeichnet,**
**dass** für den Strahlengang des Reflexionsstrahls (33) ein Strahlenkanal ausgebildet ist, in dem zumindest abschnittsweise gleichzeitig ein Strahlengang (15) der ersten Laserquelle und ein Strahlengang (16) der zweiten Laserquelle verlaufen.

10. Laseranordnung nach einem der Ansprüche 6 bis 9,
**dadurch gekennzeichnet,**
**dass** der Strahlenkanal eine Lotmaterialdepotaufnahme (23) zur Aufnahme des Lotmaterialdepots während der ersten und zweiten Beaufschlagungsphase aufweist.

## Claims

1. A method for fusing a solder material deposit by means of laser energy, in which laser radiation emitted from a first laser source is applied to the solder material deposit in a first application phase by means of a first laser device (11) and laser radiation emitted from a second laser source is applied to the solder material deposit in a second application phase by means of a second laser device (12), said first laser source having a lower laser power than the second laser source, a switch being made from the first application phase to the second application phase by means of a switching device (30) and said switch being triggered by a temperature sensor, by means of which the temperature of the solder material deposit is measured at least during the first application phase.

2. The method according to claim 1,
**characterised in that**
in the second application phase, the application of laser radiation to the solder material deposit takes place using the second laser device (12) in addition to using the first laser device (11).

3. The method according to claim 1 or 2,
**characterised in that**
during the second application phase, the temperature of the solder material deposit is measured by means of the temperature sensor, and the second application phase is terminated depending on the temperature of the solder material deposit.

4. The method according to any one of the preceding claims,
**characterised in that**
the switching temperature is chosen depending on the properties of the solder material deposit.

5. The method according to any one of the preceding claims,
**characterised in that**
the first laser device (11) is switched on in a standby mode being clocked for a defined duty cycle and is switched to an operating mode by means of the switching device (30) depending on a current temperature of the solder material deposit measured by means of the temperature sensor.

6. A laser arrangement (10) for applying laser energy to a solder material deposit formed in particular as a solder ball (31), said laser arrangement comprising a first laser device (11) having a first laser source and a second laser device (12) having a second laser source,
**characterised in that**
the first laser source emits a lower laser power than the second laser source, and the laser arrangement comprises a switching device (30) for activating the second laser source, said switching device being connected to a temperature sensor for triggering the switching device (30).

7. The laser arrangement according to claim 6,
**characterised in that**
the first laser device (11) comprises a diode laser (13) and the second laser device (12) comprises a pulse laser (14).

8. The laser arrangement according to claim 6 or 7,
**characterised in that**
the temperature sensor is realized as an infrared sensor (25) arranged in a beam path of a reflection beam (33) of the solder material deposit.

9. The laser arrangement according to claim 8,
**characterised in that**
a beam channel is realized for the beam path of the reflection beam (33), a beam path (15) of the first laser source and a beam path (16) of the second laser source extending simultaneously in the beam channel at least in sections.

10. The laser arrangement according to any one of the claims 6 to 9,
**characterised in that**
the beam channel comprises a solder material deposit receptacle (23) for receiving the solder material deposit during the first application phase and the second application phase.

## Revendications

1. Procédé pour fondre un dépôt de matériau de brasage au moyen d'énergie laser dans lequel le dépôt de matériau de brasage est alimenté en rayonnement laser émis par une première source laser au moyen d'un premier dispositif laser (11) dans une première phase d'alimentation et est alimenté en rayonnement laser émis par une deuxième source laser au moyen d'un deuxième dispositif laser (12) dans une deuxième phase d'alimentation, la première source laser ayant une puissance laser inférieure à celle de la deuxième source laser, un changement de la première phase d'alimentation à la deuxième phase d'alimentation s'effectuant au moyen d'un dispositif de commutation (30) et la commutation étant causée par un capteur de température au moyen duquel la température du dépôt de matériau de brasage est mesurée au moins pendant la première phase d'alimentation.

2. Procédé selon la revendication 1,
**caractérisé en ce que**,
dans la deuxième phase d'alimentation, l'alimentation du dépôt de matériau de brasage par le deuxième dispositif laser (12) s'effectue additionnellement à l'alimentation par le premier dispositif laser (11).

3. Procédé selon la revendication 1 ou 2,
**caractérisé en ce que**
la température du dépôt de matériau de brasage est mesurée au moyen du capteur de température pendant la deuxième phase d'alimentation et que la deuxième phase d'alimentation est terminée en fonction de la température du dépôt de matériau de brasage.

4. Procédé selon l'une quelconque des revendications précédentes,
**caractérisé en ce que**
la température de commutation est sélectionnée en fonction des propriétés du dépôt de matériau de brasage.

5. Procédé selon l'une quelconque des revendications précédentes,
**caractérisé en ce que**
le premier dispositif laser (11) est allumé de manière cadencée dans un mode veille pour une durée d'allumage définie et est commuté dans un mode opérationnel au moyen du dispositif de commutation (30) en fonction d'une température actuelle du dépôt de matériau de brasage mesurée au moyen du capteur de température.

6. Ensemble laser (10) pour alimenter un dépôt de matériau de brasage, notamment formé comme bille de brasage, en énergie laser, l'ensemble laser comprenant un premier dispositif laser (11) ayant une première source laser et un deuxième dispositif laser (12) ayant une deuxième source laser, **caractérisé en ce que**
la première source laser émet une puissance laser inférieure à celle de la deuxième source laser, et l'ensemble laser comprend un dispositif de commutation (30) pour activer la deuxième source laser, le dispositif de commutation étant relié a un capteur de température pour déclencher le dispositif de commutation (30).

7. Ensemble laser selon la revendication 6,
**caractérisé en ce que**
le premier dispositif laser (11) comprend un laser à diode (13) et le deuxième dispositif laser (12) comprend un laser à impulsions (14).

8. Ensemble laser selon la revendication 6 ou 7,
**caractérisé en ce que**
le capteur de température est formé comme capteur infrarouge (25) disposé dans une trajectoire de faisceau d'un faisceau de réflexion (33) du dépôt de matériau de brasage.

9. Ensemble laser selon la revendication 8,
**caractérisé en ce**
**qu'**un canal de faisceau est formé pour la trajectoire de faisceau du faisceau de réflexion (33) dans lequel s'étendent, au moins par sections, en même temps une trajectoire de faisceau (15) de la première source laser et une trajectoire de faisceau (16) de la deuxième source laser.

10. Ensemble laser selon l'une quelconque des revendications 6 à 9,
**caractérisé en ce que**
le canal de faisceau comprend un logement du dépôt de matériau de brasage (23) pour recevoir le dépôt de matériau de brasage pendant la première et la deuxième phase d'alimentation.
